# EUROPÄISCHE PATENTANMELDUNG

(11) **EP 0 776 720 A1**
(43) Veröffentlichungstag der Anmeldung: **04.06.1997**
(21) Anmeldenummer: 96118989.1
(22) Anmeldetag: 27.11.1996
(51) Int. Cl.: B23B 39/00, B23Q 39/04, B23Q 1/54, B23Q 1/26, B23Q 7/14

(54) **Karussellwerkzeugmaschine**

(30) Priorität: 28.11.1995 DE 19544265
(71) Anmelder: GRUNDFOS A/S, DK-8850 Bjerringbro (DK)
(72) Erfinder: Jensen, Niels Due, 8850 Bjerringbro (DK); Steenbock, Herbert, 23826 Bark (DE); Tegen, Sönke, 23867 Sülfeld (DE)
(74) Vertreter: Vollmann, Heiko, Dipl.-Ing.

(57) **Zusammenfassung**

Die Maschine (1) umfaßt eine zentrale intermittierend drehantreibbare Haltevorrichtung (5) mit mehreren Aufnahmen (6) für in Ruhestellung zu bearbeitende Werkstücke (7) und entsprechend der Anzahl der Aufnahmen um die Haltevorrichtung herum vorgesehene Arbeitsstationen. Jede Arbeitsstation kann eine obere, eine untere und eine mittlere, je einen Werkzeugträger (11) aufweisende Einheit (8, 9, 10) zur Bearbeitung des in der jeweiligen Aufnahme der Haltevorrichtung eingespannten Werkstückes umfassen. Dabei ist wenigstens eine Bearbeitungseinheit (10) in wenigstens einer Arbeitsstation so ausgebildet, daß deren Werkzeugträger (11) innerhalb eines dreiachsigen Koordinatensystemes (X, Y, Z) programmgesteuert einstellbar ist. Zur Erzielung einer kompakten Bauweise der Karussellwerkzeugmaschine (1) ist der Werkzeugträger (11) zur Einstellung seines darin eingespannten Werkzeuges bezüglich einer zur der Haltevorrichtung (5) tangential verlaufenden Einstellkoordinate zu seiner Verdrehung um eine Schwenkachse (17) antreibbar gelagert, die senkrecht auf einer durch die beiden anderen Koordinaten gebildeten Ebene steht, wobei die Werkzeugeinspannstelle des Werkzeugträgers (11) zu der Schwenkachse (17) radial beabstandet ist.

## Beschreibung

Die Erfindung geht aus von einer Karussellwerkzeugmaschine nach dem Oberbegriff des Patentanspruches 1.

Eine derartige Maschine ist in der DE 39 41 480 C2 offenbart. Sie umfaßt ein käfigartig aufgebautes Gestell aus mehreren, sternförmig um eine zentrale Vertikalachse ortsfest angeordneten, C-förmigen Ständern. Um die Vertikalachse ist innerhalb der Ständer eine taktweise drehantreibbare Haltevorrichtung mit einer Mehrzahl von Aufnahmen vorgesehen, in denen die zu bearbeitenden Werkstücke eingespannt werden. Die Anzahl der Aufnahmen entspricht der Anzahl der C-förmigen Ständer. An jedem Ständer sind drei Bearbeitungseinheiten vorgesehen, und zwar eine obere, eine untere und eine mittlere, etwas radial außerhalb gelagerte Einheit. Die Einheiten können ein in der zugehörigen Aufnahme eingespanntes Werkstück gleichzeitig bearbeiten, und zwar von oben, von unten und radialseitlich außen. Je eine Aufnahme bildet zusammen mit den Bearbeitungseinheiten eines zugehörigen Ständers eine Arbeitsstation einschließlich einer Belade- und Entladestation. Alle Bearbeitungseinheiten können mit einem Schlittenaufbau ausgerüstet sein, der derart konstruiert ist, daß das gerade für einen Arbeitsgang bestimmte Werkzeug in den drei Koordinaten X, Y und Z eines rechtwinkligen Koordinatensystemes einstellbar ist. Hierbei ist es möglich, den Schlittenaufbau in den drei genannten Koordinaten programmgesteuert zu betreiben. Derartige Werkzeugmaschinen haben sich für die Massenfertigung gut bewährt. Da bei vorgegebener Zeit eine hohe Stückzahl an Werkstücken zu günstigen Kosten hergestellt werden kann. Nachteilig ist jedoch die im Verhältnis große Bauweise der Maschinen, die somit einen entsprechend großen Aufstellplatz benötigen. Eine kleiner Bauweise der Maschinen hätte zur Folge, daß der tangentiale Bewegungsspielraum (X-Koordinate) für den jeweiligen Werkzeugträger, der zur Bearbeitung des Werkstückes in den drei genannten Koordinaten eingestellt wird, nicht ausreicht, um auch größere Werkstücke, z. B. größere Pumpengehäuse, bearbeiten zu können, um beispielsweise in den Flanschen des Gehäuses Gewindelöcher vorzusehen. Im wesentlichen ist dies durch den den Werkzeugträger aufnehmenden Schlittenaufbau jeder Bearbeitungseinheit bedingt, der zu seiner tangentialen Verstellung, d. h. in Richtung seiner X-Koordinate, keinen ausreichenden Platz zur Verfügung hätte.

Die Aufgabe der Erfindung besteht in der Verbesserung einer Karussellwerkzeugmaschine der einleitend angeführten Art, die raumsparend aufgebaut ist und es ermöglicht, neben großen auch kleine und kleinste Serien von Werkstücken auch relativ großer Abmessungen wirtschaftlich zu fertigen. Darüberhinaus soll der Einbau von Antriebsmotoren hoher Leistung möglich sein.

Die Lösung der Aufgabe ist in dem Patentanspruch 1 angegeben.

Durch diese Ausbildung des Werkzeugträgers ist der Schlittenaufbau der jeweiligen Bearbeitungseinheit in seiner Konstruktion wesentlich vereinfacht, insbesondere dadurch, daß er keinen Verschiebeaufbau in tangentialer Bewegungsrichtung, d. h. in Richtung der X-Koordinate, benötigt. Trotzdem wird erreicht, daß der Werkzeugträger und damit das darin exzentrisch eingespannte Werkzeug in tangentialer Richtung einen relativ großen Einstellweg zur Verfügung hat. Somit können auch Werkstücke bearbeitet werden, die eine relativ große Abmessung aufweisen, obwohl der Gestellaufbau wegen der raumsparenden bzw. kompakten Bauweise der erfindungsgemäßen Karussellwerkzeugmaschine in tangentialer Richtung verhältnismäßig wenig Platz anbietet. Insgesamt wird also eine in ihren äußeren Abmessungen erheblich verkleinerte Karussellwerkzeugmaschine bei mindestens gleicher Produktionsleistung im Vergleich mit bekannten Maschinen erreicht. Des weiteren ist es möglich, für den Antrieb des Werkzeuges des Werkzeugträgers einen sehr starken Elektromotor zu installieren, z. B. mit einer Leistung von 4,0 kW, weil der vereinfachte Aufbau der Bearbeitungseinheit ebenfalls mehr Platz zu dessen Montage zur Verfügung stellt.

Außerdem können mit der erfindungsgemäßen Maschine neben Großserien auch Klein- und Kleinstserien wirtschaftlich gefertigt werden, weil die Einrichtzeiten für die arbeitsfertige Einstellung der eingespannten Werkzeuge und die spanende Bearbeitung der Werkstücke selbst nach einem in einem Rechner vorgegebenen Programm extrem kurz gehalten werden können. Ein weiterer Vorteil besteht darin, daß zum Beispiel zur Herstellung mehrerer Bohrungen auf einer Seite des Werkstückes anstelle eines Mehrspindelbohrkopfes nur ein einziges Bohrwerkzeug erforderlich ist, welches programmgesteuert durch Verschwenkung entsprechend im wesentlichen der tangentialen X-Koordinate in Zusammenwirkung mit einer ergänzenden geraden Einstellbewegung in Richtung der radialen Y-Koordinate vorpositioniert werden kann. Die Einstellung des Werkzeuges in Richtung der Z-Koordinate, d. h. in seiner Vorschubrichtung, und seine anschließende Vorschubbewegung zur Durchführung des spanenden Bearbeitungsvorganges erfolgt dann auf übliche Weise.

Eine bevorzugte Ausgestaltung der erfindungsgemäßen Karussellwerkzeugmaschine besteht darin, daß der Werkzeugträger mit einem Antriebsritzel verbunden ist, das mit einer hin- und hergehend antreibbaren Zahnstange in Eingriff steht. Hierdurch wird eine raumsparende Konstruktion für den Werkzeugträger zur Verschiebung in Richtung der X-Koordinate geschaffen. Die Zahnstange kann mit Hilfe einer Hydraulikzylindereinheit angetrieben werden, die mit einer integrierten positionsabfragbaren Wegmeßeinrichtung versehen ist. Ein solcher Antrieb ist gegen die Umgebungseinflüsse der Werkzeugmaschine unempfindlich.

Des weiteren kann der Werkzeugträger auf einem Schlitten angeordnet sein, der in Richtung der radialen Y-Koordinate antreibbar ist. Dieser Schlittenaufbau ist wiederum an einem Basisaufbau angeordnet, der in Richtung der Z-Koordinate antreibbar ist. Als Antrieb für den Schlitten bzw. den Basisaufbau kann wiederum eine Hydraulikzylindereinheit mit einer integrierten positionsabfragbaren Wegmeßeinrichtung dienen. Hierdurch ergibt sich ein vereinfachter Aufbau der jeweiligen Bearbeitungseinheit, der unempfindlich gegen die Umgebungseinflüsse der Werkzeugmaschine ist.

Nach einem weiteren Merkmal ist die radial arbeitende Bearbeitungseinheit um eine zusätzliche vertikale Achse in horizontaler Richtung seitlich verschwenkbar und in Arbeitsstellung fixierbar ausgebildet ist. Hierdurch wird erreicht, daß sämtliche Werkzeuge innerhalb einer Arbeitsstation, z. B. zwecks Wartung und Werkzeugwechsels leicht und schnell zugänglich sind.

Ein anderes bevorzugtes Ausgestaltungsmerkmal der erfindungsgemäßen Karussellwerkzeugmaschine besteht darin, daß die Aufnahmen der Werkstückhaltevorrichtung je mit einer abnehmbaren Spannpalette ausrüstbar sind. So ist es möglich, die zu bearbeitenden Werkstücke bereits außerhalb der Werkzeugmaschinen auf der jeweiligen Spannpalette zu montieren, die dann ihrerseits schnell und einfach an der jeweiligen Aufnahme der taktweise angetriebenen Werkstückhaltevorrichtung montiert werden kann. Hierdurch wird die Rüstzeit zum Aufspannen des Werkstückes in der Werkzeugmaschine verkürzt.

Die Erfindung ist nachstehend anhand eines in anliegenden Zeichnungen dargestellten Ausführungsbeispieles näher erläutert. Es zeigen:
- Fig. 1: eine perspektivische Teilansicht einer beispielsweise Karussellwerkzeugmaschine mit herausgeschwenkter mittlerer Bearbeitungseinheit,
- Fig. 2: eine perspektivische Ansicht auf eine untere Bearbeitungseinheit,
- Fig. 3: einen Längsschnitt durch die untere Bearbeitungseinheit,
- Fig. 4: einen Querschnitt nach der Linie IV-IV in Fig. 3,
- Fig. 5: eine in Fixierungsstellung zurückgeschwenkte mittlere Bearbeitungseinheit in seitlicher Ansicht,
- Fig. 6: eine Aufsicht auf eine in Fixierungsstellung befindliche mittlere Bearbeitungseinheit,
- Fig. 7: eine Aufsicht auf eine herausgeschwenkte mittlere Bearbeitungseinheit,

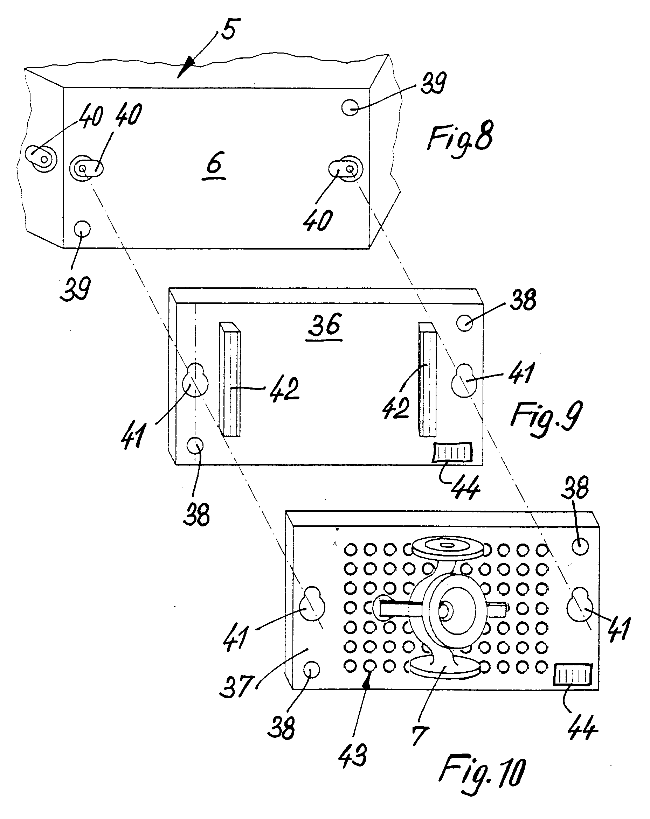

- Fig. 8: eine teilweise Darstellung der sich taktweise drehenden Werkstückhaltevorrichtung der Karussellwerkzeugmaschine in Seitenansicht,
- Fig. 9: eine Spannpalette von vorn,
- Fig. 10: eine modifizierte Spannpalette von vorn.

Die allgemein mit 1 bezeichnete Karussellwerkzeugmaschine ist in ihrem grundsätzlichen Aufbau bekannt und daher diesbezüglich nur kurz erläutert. Das Maschinengestell umfaßt beispielsweise sechs mit gleichmäßigem Abstand voneinander umfangsmäßig angeordneten, vertikalen Säulen 2, die mittels eines oberen Verbindungsaufbaues 3 und eines unteren Verbindungsaufbaues 4 in Position gehalten werden. Zwischen den Aufbauten 3 und 4 ist eine zentrale, um eine aufrechte Achse intermittierend drehantreibbare Werkstückhaltevorrichtung in bekannter Weise angeordnet, zum Beispiel ein sogenannter Drehtisch, die bzw. der mehrere Aufnahmen für in Ruhestellung zu bearbeitende Werkstücke aufweist. Die Werkstückhaltevorrichtung bzw. der Drehtisch weist beispielsweise fünf Aufnahmen 6 auf, wobei jede Aufnahme 6 ein Werkstück 7 trägt. Bei sechs Aufnahmen ergeben sich fünf Bearbeitungsstationen, denen je mindestens eine Bearbeitungseinheit zugeordnet ist und üblicherweise eine Belade- und Entladestation.

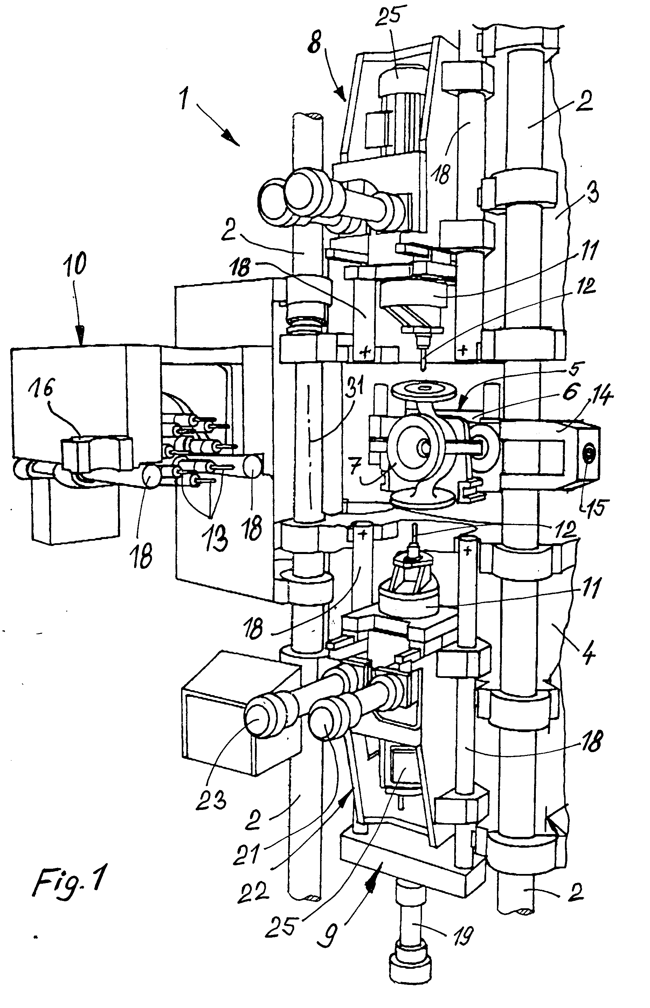

Im dargestellten Fall nach Fig. 1 ist die gezeigte eine Arbeitsstation mit drei Bearbeitungseinheiten ausgerüstet, und zwar eine obere Einheit 8, eine untere Einheit 9 und eine mittlere Einheit 10. Jede Bearbeitungseinheit ist mit einem einstellbaren Werkzeugträger 11 versehen, der mit wenigstens einem Werkzeug 12, zum Beispiel einem Bohrer, bestückt ist. Im dargestellten Fall ist der Werkzeugträger der Bearbeitungseinheit 10 mit einer Mehrzahl von Bohrern 13 ausgerüstet, die auf einem Kreis angeordnet sind, um mehrere Löcher gleichzeitig zu bohren.

Der Werkzeugträger 11 und damit das darin eingespannte Werkzeug 12 kann maximal in drei Raumkoordinaten X, Y und Z eingestellt werden, wie noch klar wird. Im dargestellten Fall nach Fig. 1 ist der Werkzeugträger 11 der oberen Bearbeitungseinheit 8 und der unteren Bearbeitungseinheit 9 in den drei genannten Koordinaten einstellbar, während die mittlere Bearbeitungseinheit 10 nur in einer Koordinate einstellbar ist, nämlich in radialer Richtung, während deren Werkzeugträger ständig auf die beiden anderen Koordinaten eingestellt ist. Jedoch ist es möglich, daß auch die Bearbeitungseinheit 10 bzw. deren Werkzeugträger in drei Koordinaten einstellbar ist, und zwar gemäß dem Werkzeugträger der beiden anderen Einheiten 8 und 9.

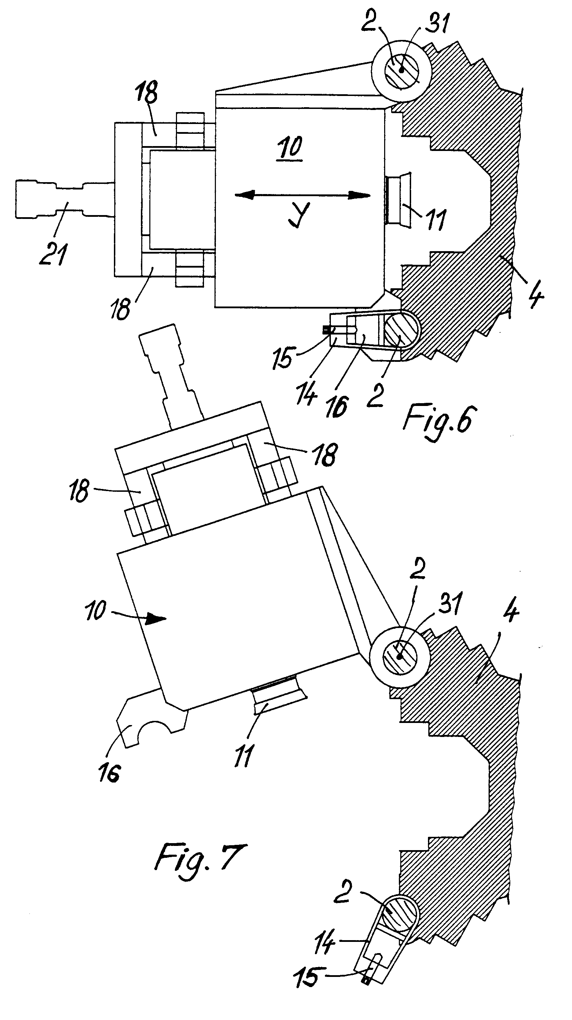

Fig. 1 zeigt weiter, daß die mittlere Bearbeitungseinheit 10 an einer Säule 2 verschwenkbar gelagert ist, wie es auch in den Figuren 6 und 7 erkennbar ist. Die Figuren 1 und 7 zeigen die mittlere Einheit 10 in herausgeschwenkter Stellung, während die Einheit 10 in Fig. 6 in Fixierungsstellung gezeigt ist. Diese Anbringungsweise der Einheit 10 ermöglicht, daß bei herausgeschwenkter Einheit 10 sämtliche Werkzeuge aller Einheiten 8, 9 und 10 zu Wartungszwecken und Werkzeugwechsel schnell und einfach zugänglich sind. Hieraus resultieren auch kurze Stillstandszeiten der Maschine 1, wenn ein Werkzeug gewechselt oder eine Wartung an der Maschine vorgenommen werden muß. Für die Fixierung der mittleren, radial arbeitenden Bearbeitungseinheit 10 ist ein am Gestell, beispielsweise an der Säule 2, der Maschine 1 angeordneter, verschwenkbarer Bügel 14 mit Feststellmitteln 15 und ein an der Bearbeitungseinheit ausgebildeter Vorsprung 16 vorgesehen, der in den Bügel 14 eingreift, wie es aus Fig. 6 deutlich hervorgeht. Die Feststellmittel bestehen beispielsweise aus einer einzigen Schraube 15, die gegen den Vorsprung 16 gedrückt wird und so die Einheit 10 fixiert. Diese Konstruktion ermöglicht ein schnelles, d. h. zeitsparendes Lösen und Fixieren der Einheit 10.

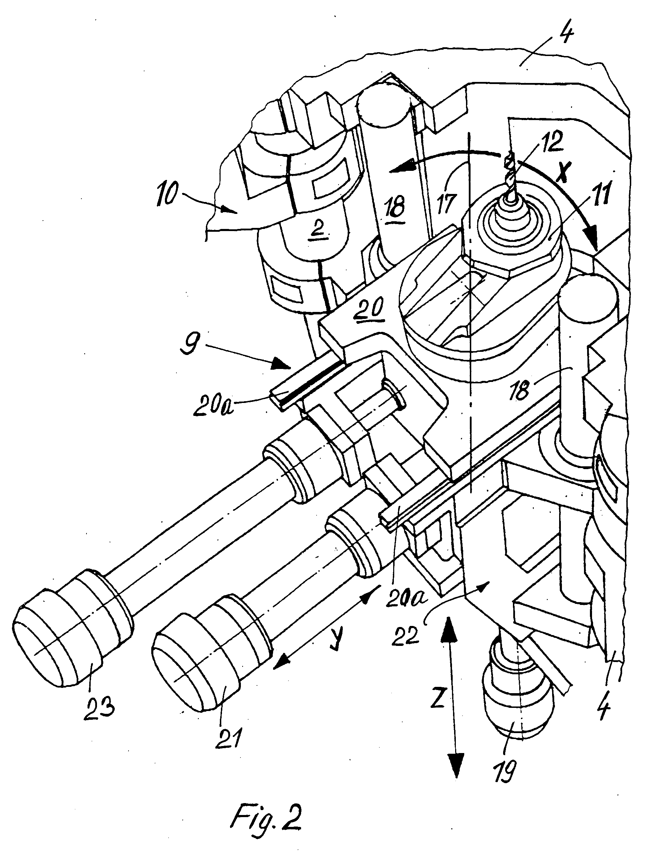

In Verbindung mit Fig. 2, welche die untere Bearbeitungseinheit 9 zeigt, sind nun die Bewegungsabläufe zur Einstellung und Betätigung des Werkzeuges 12 näher erläutert. Die erläuterten Bewegungsabläufe gelten jedoch analog auch für die obere Bearbeitungseinheit 8 und die mittlere Bearbeitungseinheit 10. Während die obere und die untere Einheit in vertikaler Richtung spangebend arbeiten, erfolgt die spangebende Bearbeitung der mittleren Einheit 10 in radialer Richtung, und zwar radial zur Werkstückhaltevorrichtung 5, an der das zu bearbeitende Werkstück 7 eingespannt ist.

Zunächst wird das Werkzeug 12 in den drei genannten Koordinaten X, Y und Z eingestellt; hierbei sei die radiale Einstellrichtung, die Y-Koordinate, die tangentiale Einstellrichtung, die X-Koordinate und die vertikale Einstellrichtung, die Z-Koordinate. Während die Einstellungen in Y- und Z-Richtung ausschließlich geradlinig gemäß den gezeigten Doppelpfeilen erfolgen, setzt sich die genaue Einstellung in Richtung der X-Koordinate aus zwei Teilbewegungen zusammen. Hierzu ist der Werkzeugträger 11 um eine Schwenkachse 17 antreibbar gelagert, zu der das Werkzeug 12 gemäß Fig. 2 exzentrisch gelagert ist. Somit führt das Werkzeug 12 eine Kreisbogenbewegung gemäß dem angezeigten Doppelpfeil um die Achse 17 durch. Zusätzlich zu der Schwenkbewegung des Werkzeuges 12 um die Achse 17 erfolgt noch die Bewegung des Werkzeuges 12 entsprechend der Y-Koordinate, so daß letztlich eine Einstellung des Werkzeuges 12 entlang einer geradlinig verlaufenden X-Einstellrichtung entspricht.

Da die Schwenkachse 17 senkrecht auf einer Ebene steht, die durch die Koordinaten Y und X gebildet wird, erfolgt die letzte Einstellung des Werkzeuges 12 in Richtung der Z-Koordinate, die ebenfalls senkrecht zu der genannten Ebene und parallel zu der Schwenkachse 17 verläuft.

Jede Bearbeitungseinheit 8, 9 und 10 ist an zwei sich mit Abstand gegenüberliegenden Säulen 18 gleitend gelagert, die wiederum an den Gestellaufbauten 3 und 4 der Maschine 1 ortsfest angeordnet sind.

Zur Einstellung und Arbeitsbewegung in Richtung der Z-Koordinate ist eine Hydraulikzylindereinheit 19 vorgesehen, die mit einer Positionsabfragbaren Wegmeßeinrichtung (nicht gezeigt) versehen ist. Eine solche elektronisch abfragbare Wegmeßeinrichtung kann bevorzugter Weise innerhalb der Einheit 19 vorgesehen sein, so daß sie gegen Umgebungseinflüsse der Maschine geschützt und sicherer Arbeitsbetrieb der Einheit 19 gewährleistet ist.

Gemäß Fig. 2 ist der Werkzeugträger 11 auf einem Schlitten 20 um die Schwenkachse 17 bewegbar gelagert, der mittels einer weiteren Hydraulikzylindereinheit 21 in Richtung der Y-Koordinate bewegbar ist. Der Schlitten 20 ist auf Schienen 20a eines Basisaufbaues 22 der Bearbeitungseinheit 9 verschiebbar gelagert. Die Hydraulikzylindereinheit 21 ist ebenfalls mit einer positionsabfragbaren Wegmeßeinrichtung ausgerüstet.

Eine noch weitere Hydraulikzylindereinheit 23 mit einer integrierten Wegmeßeinrichtung ist an dem Basisaufbau 22 der Einheit 9 befestigt und bewirkt die Verschwenkung des Werkzeugträgers 11 um die Schwenkachse 17.

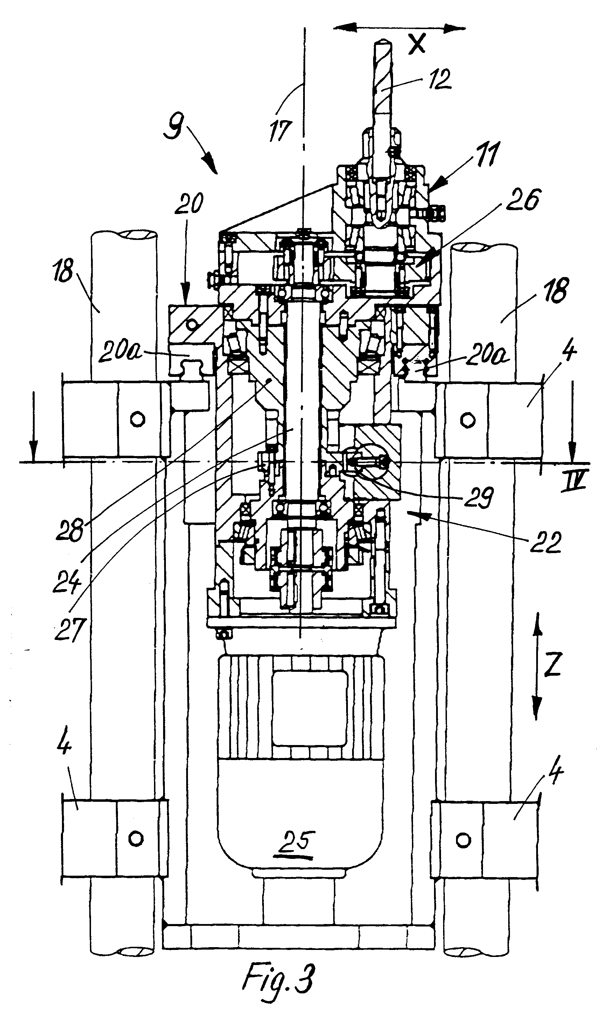

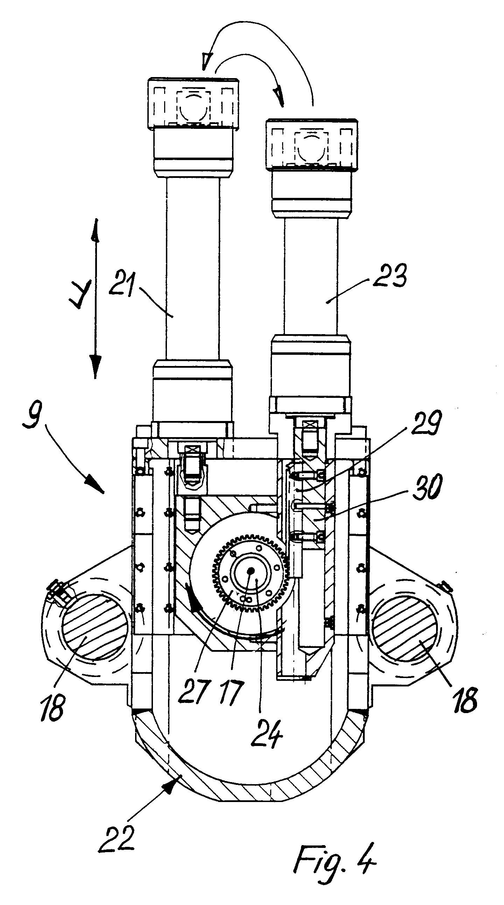

Die Mechanik für die Verschwenkung des Werkzeugträgers 11 und damit des darin eingespannten Werkzeuges 12 ist am besten aus dem Figuren 3 und 4 zu erkennen. Der Schlitten 20 weist eine die Schwenkachse 17 festlegende Welle 24 auf, die oben aus dem Schlitten herausragt und an ihrem Oberende den Werkzeugträger 11 verschwenkbar trägt. Die Welle 24 wird von einem Elektromotor 25 hoher Leistung angetrieben. Im Werkzeugträger 11 ist eine Stirnradgetriebestufe 26 vorgesehen, um die Drehbewegung von der Welle 24 auf das Werkzeug 12 zwecks Durchführung des spangebenden Bearbeitungsvorganges zu übertragen.

Im unteren Bereich ist die Welle 24 von einem Antriebsritzel 27 verbindungsfrei koaxial umgeben, welches an einem hülsenartigen Kraftübertragungsteil 28 befestigt ist, an welchem wiederum der Werkzeugträger 11 drehfest befestigt ist. Der Werkzeugträger 11 ist seinerseits drehbar im Schlitten 20 gelagert.

Wie es besser aus Fig. 4 zu erkennen ist, steht das Antriebsritzel 27 mit einer hin- und hergehend antreibbaren Zahnstange 29 in Verbindung, die an einem äußeren Kolbenstangenteil 30 der Hydraulikzylindereinheit 23 befestigt ist. Somit wird bei Bewegung der Zahnstange der Werkzeugträger 11 über das Ritzel 27 und das Bauteil 28 um die Schwenkachse 17 bewegt. Das Werkzeug 12 führt dabei eine Schwenkbewegung um die Schwenkachse 17 durch, weil es von dieser Achse radial beabstandet ist, wie Fig. 3 deutlich zeigt. Insbesondere die Figuren 2, 3 und 4 zeigen sehr deutlich, daß das Werkzeug 12 einen sehr großen tangentialen Einstellweg in Richtung der X-Koordinate zur Verfügung hat, obwohl die Führungssäulen 18 und auch die Hauptsäulen 2 der Maschine 1 sehr eng beieinander stehen. Es ist für den Fachmann ohne weiteres verständlich, daß ein solch relativ großer Verstellweg in Richtung der tangentialen X-Koordinate nicht erzielbar ist, wenn ein Schlittenaufbau gewählt wird, der in dieser Richtung verstellbar sein müßte, weil hierzu kein ausreichender Platz zwischen den Säulen 18 zur Verfügung steht. Hierdurch wird eine sehr kompakte Bauweise einer Karussellwerkzeugmaschine sehr wesentlich begründet im Vergleich zu einer Maschine, die ebenso viele Arbeitsstationen einschließlich einer Belade- und Entladestation aufweist.

Die beiden anderen Bearbeitungseinheiten 8 und 10 können ebenso aufgebaut sein wie die vorstehend beschriebene Bearbeitungseinheit 9. Dies ist jedoch nicht Voraussetzung; je nach Anwendungsfall kann es auch ausreichen, daß nur eine Arbeitsstation mit einer vorstehend beschriebenen Bearbeitungseinheit ausgerüstet ist. In weiterer Abänderung kann auch so vorgegangen sein, daß nur eine einzige Arbeitsstation mit einer vorstehend beschriebenen Bearbeitungseinheit ausgerüstet ist, während die anderen Bearbeitungseinheiten in herkömmlicher Weise ausgebildet sind. Wesentlich ist jedoch, daß die erfindungsgemäß ausgebildete Bearbeitungseinheit eine Verschwenkung des Werkzeuges 12 um die Schwenkachse 17 erlaubt.

Die beschriebenen Einstellbewegungen und Bearbeitungsbewegungen der jeweiligen Bearbeitungseinheit 8 und/oder 9 und/oder 10 werden in herkömmlicher Weise programmgesteuert durchgeführt. Hierzu ist der Karussellwerkzeugmaschine 1 ein Rechner (nicht gezeigt) zugeordnet, in den das für das jeweilige, zu bearbeitende Werkzeug benötigte Programm eingegeben ist. Hierdurch ist es möglich, die Maschine 1 in kürzester Zeit einzurichten und/oder umzurüsten, um auch Klein- und Kleinstserien von Werkstücken, zum Beispiel von Pumpengehäusen, bearbeiten zu können. Die Hydraulikzylindereinheiten 19, 21 und 23 mit ihren integrierten Wegmeßeinrichtungen der jeweiligen Bearbeitungseinheit in der gewünschten Arbeitsstation arbeiten mit dem Rechner zusammen, so daß eine genaue Programmsteuerung des oder der Werkzeuge 12 gewährleistet ist.

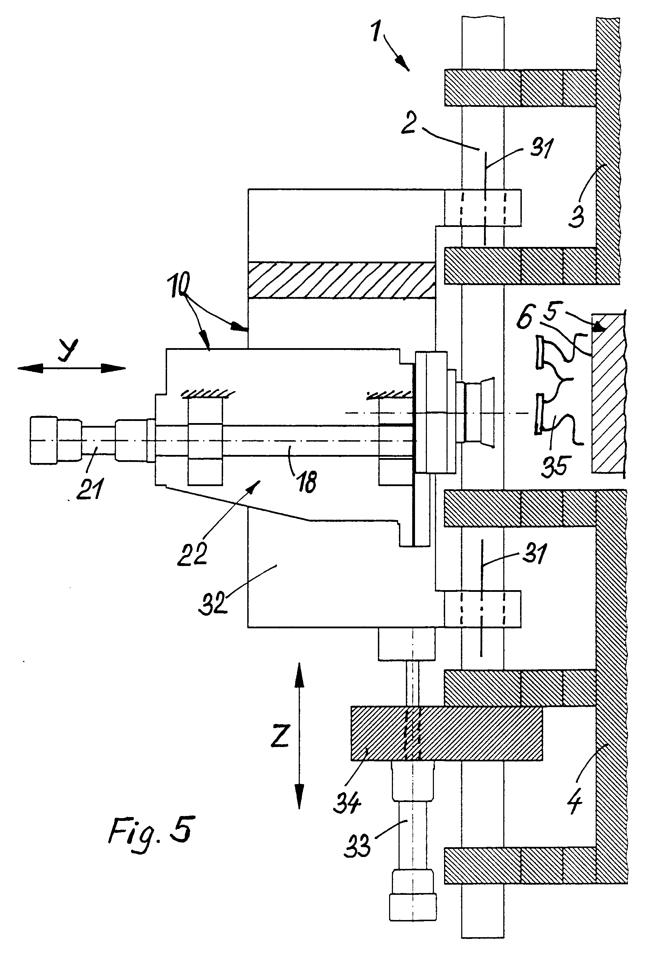

Fig. 5 zeigt eine modifizierte mittlere, radial arbeitende Bearbeitungseinheit 10. Wie schon in Verbindung mit den Figuren 1, 6 und 7 beschrieben ist, ist diese Einheit 10 an der Säule 2 der Karussellwerkzeugmaschine 1 schwenkbar und fixierbar gelagert. Unabhängig davon, ob die Bearbeitungseinheit 10 selbst in drei oder in einer der vorgenannten Koordinaten einstellbar ist, ist die Einheit 10 noch um eine weitere Achse 31, die parallel zur Z-Koordinate verläuft, in der Höhe einstellbar. Hierzu ist das Seitenteil 32 der Einheit 10 mit einer Hydraulikzylindereinheit, ebenfalls mit einer integrierten Wegmeßeinrichtung versehen, verbunden, die wiederum über ein Befestigungsteil 34 an einem der Aufbauten 3 und 4 der Maschine 1 gehaltert ist. Hierdurch ist es möglich, die einmal gewählte Einstellung des oder der Werkzeuge des Werkzeugträgers 11 durch nur eine einzige Verschiebetätigkeit der Einheit 10 nach oben oder unten zu verstellen bzw. das oder die Werkzeuge in eine neue Arbeitsposition zu verfahren. Dies kann zum Beispiel vorteilhaft sein, wenn es sich um sogenannte Gehäuse für Doppelpumpen handelt, die auf einer Seite zwei Befestigungsflansche aufweisen, in welche Befestigungslöcher gebohrt werden sollen. Hierzu eignet sich sehr vorteilhaft ein Mehrspindelbohrkopf mit mehreren Bohrwerkzeugen 13, wie es beispielsweise bei der Bearbeitungseinheit 10 in Fig. 1 gezeigt ist.

Zur weiteren Verkürzung der Rüstzeit der Karussellwerkzeugmaschine 1 kann die Aufnahme 6 der taktweise um die aufrechte zentrale Achse der Maschine 1 antreibbare Werkstückhaltevorrichtung 5 mit einer Spannpalette 36 oder 37 ausgerüstet werden. Die jeweilige Spannpalette ist ein plattenförmiges Gebilde und besitzt zwei, sich zum Beispiel diagonal gegenüberliegende Zentrierlöcher 38, denen entsprechende Zentrierlöcher 39 der Aufnahme 6 der Werkstückhaltevorrichtung 5 zugeordnet sind. Spannmittel 40 der Haltevorrichtung 5 durchgreifende entsprechende Spannlöcher 41 der Palette 36 bzw. 37 und bewirken ein Anklemmen der Palette 36, 37 an der Aufnahmeseite 6 der Vorrichtung 5. Die Spannpalette 36 kann mit Hilfsspannmitteln 42 versehen sein.

Gemäß Fig. 10 ist die Spannpalette 37 mit einer Rasteranordnung 43 aus Gewindelöchern versehen. Hierdurch können autarke Spannmittel (nicht gezeigt) an der Spannpalette 37 befestigt werden, die dann ihrerseits das Werkstück 7 an der Palette 37 befestigen.

Die Anbringung der entsprechenden Werkstücke an der jeweiligen Spannpalette erfolgt außerhalb der Karussellwerkzeugmaschine 1. Da die jeweilige, so bestückte Spannpalette, auf einfache Weise an der Aufnahmeseite 6 der Vorrichtung 5 befestigt werden kann, ist ein schnelles und sehr kurzes Anbringen des zu bearbeitenden Werkstückes in der Aufnahme 6 der Vorrichtung 5 erzielbar, da praktisch nur die Spannmittel 40 betätigt zu werden brauchen, da die jeweilige Palette mittels der Zentriermittel 38, 39 schnell positionsgenau an der Vorrichtung 5 angebracht werden können. Die Zentriermittel 39 können Löcher sein, so daß gemeinsame Zentrierstifte für die Löcher 38, 39 verwendet werden. Die Zentriermittel 39 können aber auch bereits fest an der Vorrichtung 5 angeordnete Stifte sein.

Um die richtige Bearbeitung an dem an der jeweiligen Spannpalette 36, 37 befestigten Werkstück vornehmen zu können, ist die Spannpalette mit einer Codiereinrichtung 44 versehen. Diese arbeitet mit dem vorerwähnten Rechner zusammen, so daß dessen Bearbeitungsprogramm aufgrund der jeweiligen Codierung in der Codiereinheit 44 das entsprechende Bearbeitungsprogramm auswählt und dementsprechend die jeweilige Bearbeitungseinheit 8 und/oder 9 und/oder 10 steuert.

## Patentansprüche

1. Karussellwerkzeugmaschine, umfassend
a) eine zentrale, um eine aufrechte Achse intermittierend drehantreibbare Werkstückhaltevorrichtung mit mehreren Aufnahmen für in Ruhestellung zu bearbeitende Werkstücke,
b) entsprechend der Anzahl der Aufnahmen um die Haltevorrichtung herum vorgesehene Arbeitsstationen einschließlich einer Belade- und Entladestation für das jeweilige Werkstück,
c) wobei jede Arbeitsstation eine obere, eine untere und eine mittlere, je einen Werkzeugträger aufweisende Einheit zur Bearbeitung des in der jeweiligen Aufnahme der Haltevorrichtung eingespannten Werkstückes umfassen kann,
d) und wobei wenigstens eine Bearbeitungseinheit in wenigstens einer Arbeitsstation so ausgebildet ist, daß deren Werkzeugträger in Richtung der X- (tangential), Y- (radial), und Z- (vertikal) Koordinate programmgesteuert verfahrbar und einstellbar ist,
dadurch gekennzeichnet,
e) daß der Werkzeugträger (11) zur Einstellung seines darin eingespannten Werkzeuges (12) bezüglich der tangentialen X-Koordinate um eine Schwenkachse (17) antreibbar gelagert ist, die senkrecht auf der durch die Koordinaten X und Y gebildeten Ebene steht,
f) und daß die Werkzeugeinspannstelle des Werkzeugträgers (11) zu dessen genannter Schwenkachse (17) radial beabstandet ist.

2. Karussellwerkzeugmaschine nach Anspruch 1, dadurch gekennzeichnet, daß der Werkzeugträger (11) mit einem Antriebsritzel (27) verbunden ist, das mit einer hin- und hergehend antreibbaren Zahnstange (29) in Eingriff steht.

3. Karussellwerkzeugmaschine nach Anspruch 2, dadurch gekennzeichnet, daß die Zahnstange (29) mit Hilfe einer Hydraulikzylindereinheit (23) antreibbar ist, die mit einer positionsabfragbaren Wegmeßeinrichtung versehen ist.

4. Karussellwerkzeugmaschine nach Anspruch 1, 2 oder 3, dadurch gekennzeichnet, daß der Werkzeugträger (11) auf einem Schlitten (20) angeordnet ist, der in Richtung der radialen Y-Koordinate antreibbar ist.

5. Karussellwerkzeugmaschine nach einem der Ansprüche 1 bis 4, dadurch gekennzeichnet, daß der den Werkzeugträger (11) tragende Schlitten (20) an einem Basisaufbau (22) der Bearbeitungseinheit (8, 9, 10) angeordnet ist, der in Richtung Z-Koordinate antreibbar ist.

6. Karussellwerkzeugmaschine nach Anspruch 4 oder 5, dadurch gekennzeichnet, daß der Antrieb für den Schlitten (20) bzw. den Basisaufbau (22) aus einer Hydraulikzylindereinheit (21 bzw. 19) mit einer positionsabfragbaren Wegmeßeinrichtung besteht.

7. Karussellwerkzeugmaschine nach einem der Ansprüche 1 bis 6, dadurch gekennzeichnet, daß die radial arbeitende, mittlere Bearbeitungseinheit (10) um eine Schwenkachse (31) seitlich verschwenkbar und in Arbeitsstellung fixierbar ausgebildet ist.

8. Karussellwerkzeugmaschine nach Anspruch 7, dadurch gekennzeichnet, daß die radial arbeitende, mittlere Bearbeitungseinheit (10) unabhängig von der eigenen Einstellbarkeit einschließlich ihres Werkzeugträgers (11) in Richtung der Schwenkachse (31) einstellbar ist.

9. Karussellwerkzeugmaschine nach Anspruch 7 oder 8, dadurch gekennzeichnet, daß zur Fixierung der radial arbeitenden, mittleren Bearbeitungseinheit (10) ein am Gestell (2, 3, 4) der Maschine angeordneter, verschwenkbarer Bügel (14) mit Feststellmitteln (15) und ein an der Bearbeitungseinheit ausgebildeter Vorsprung (16), der in den Bügel eingreift, vorgesehen ist.

10. Karussellwerkzeugmaschine nach einem der Ansprüche 1 bis 9, dadurch gekennzeichnet, daß die Aufnahmen (6) der Haltevorrichtung (5) je mit einer abnehmbaren Spannpalette (36, 37) ausrüstbar sind.

11. Karussellwerkzeugmaschine nach Anspruch 10, dadurch gekennzeichnet, daß die Spannpalette autarke Spannmittel aufweist.

12. Karussellwerkzeugmaschine nach Anspruch 10 oder 11, dadurch gekennzeichnet, daß die Spannpalette (36, 37) mit einer Codiereinheit (44) versehen ist.

13. Karussellwerkzeugmaschine nach Anspruch 10, 11 oder 12, dadurch gekennzeichnet, daß die Spannpalette (36, 37) mit eine Rasteranordnung (43) aus Gewindelöchern zur Montage eines Werkzeuges und/oder von autarken Spannmitteln an der Palette versehen ist.
